# EUROPEAN PATENT APPLICATION

(11) **EP 2 772 839 A2**
(43) Date of publication of application: **03.09.2014**
(21) Application number: 14250024.8
(22) Date of filing: 12.02.2014
(51) Int. Cl.: G06F 3/044

(54) **Touch panel**

(30) Priority: 27.02.2013 JP 2013036812; 11.12.2013 JP 2013255699
(71) Applicant: Hosiden Corporation, Yao-shi, Osaka 581-0071 (JP)
(72) Inventor: Yokohama, Kunihiko, Yao-shi, Osaka 581-0071 (JP); Shimizu, Masaya, Yao-shi, Osaka 581-0071 (JP); Ishikawa, Hiroyuki, Yao-shi, Osaka 581-0071 (JP); Takeuchi, Shuu, Echi-gun, Shiga 529-1233 (JP)
(74) Representative: Beresford, Keith Denis Lewis

(57) **Abstract**

A touch panel with improved visibility and electrode protection is disclosed. The touch panel T includes a first translucent base 100a, a plurality of first electrodes 200a, and a first low reflective member 500a. The first translucent base 100a has a first face 110a, on the non-sensing side of the touch panel T, and a second face 120a, on the sensing side of the touch panel T. The first electrodes 200a are arranged at intervals on the first face 110a of the first translucent base 100a. The first low reflective member 500a covers the first electrodes 200a.

## Description

The invention relates to touch panels.

A conventional touch panel is illustrated in Fig. 1 of Japanese Unexamined Patent Publication No. 2009-259063. The touch panel includes first and second transparent films and a plurality of first and second electrodes. The first transparent film has a first face and a second face on the back side from the first face. The second transparent film has a first face and a second face on the back side from the first face. The first electrodes are provided on the first face of the first transparent film. The second electrodes are provided on the first face of the second transparent film. The second face of the first transparent film is affixed to the first face of the second transparent film. The second face of the second transparent film serves as a touch sensing face. The touch panel is fixed to a display (i.e., the first face of the first transparent film is fixed to the display).

The first electrodes on the first face of the first transparent film are exposed until the first face is fixed to the display. This means that the touch panel is manufactured and/or transported leaving the first electrodes on the first face of the first transparent film exposed, at risk of damage. In addition, the touch panel may be used under a condition subject to direct sunlight, so there is a demand for improvement in visibility of the touch panel.

The invention is devised in such circumstances and provides a touch panel with improved visibility and electrode protection.

A touch panel according to the invention includes a first translucent base, a plurality of first electrodes, and a first low reflective member. The first translucent base includes a first face on a non-sensing side of the touch panel and a second face on a sensing side of the touch panel. The first electrodes are arranged at intervals on the first face of the first translucent base. The first low reflective member is configured to cover the first electrodes.

In the touch panel of this aspect of the invention, the first electrodes resist damage because they are covered and protected with the first low reflective member. Moreover, the first low reflective member is utilized to protect the first electrodes on the first face on the non-sensing side of the first translucent base, making it possible to suppress light reflection from the boundary between the first low reflective member and the first electrodes. This can improve the visibility of the touch panel.

The touch panel may further include a second translucent base, a plurality of second electrodes, and a second low reflective member. The second translucent base may include a first face disposed on the second face of the first translucent base and a second face on the back side from the first face. The second electrodes may be arranged at intervals on the first face of the second translucent base so as to intersect with the first electrodes in planar position. The second low reflective member may be provided on the second face of the second translucent base.

In the touch panel of this aspect, the second low reflective member also suppresses light reflection, leading to improved visibility of the touch panel.

The touch panel may further include a plurality of first leads, a first protective layer, a plurality of second leads, and a second protective layer. The first leads may be arranged at intervals on the first face of the first translucent base and connected to the first electrodes. The first protective layer may cover the first electrodes, the first leads, or both. The second leads may be arranged at intervals on the first face of the second translucent base and connected to the second electrodes. The second protective layer may cover the second electrodes, the second leads, or both. The second face of the first translucent base may be fixed to at least one of the first face of the second translucent base and the second protective layer. The first low reflective member may be provided on at least one of the first face of the first translucent base and the first protective layer so as to cover the first electrodes.

The touch panel may further include a first index matching layer on the first face of the first translucent base. The first index matching layer may exist at least between the first translucent base and the first electrodes. The first protective layer may be provided on at least one of the first face of the first translucent base and the first index matching layer so as to cover the first electrodes, the first leads, or both. The touch panel may further include a second index matching layer on the first face of the second translucent base. The second index matching layer may exist at least between the second translucent base and the second electrodes. The second protective layer may be provided on at least one of the first face of the second translucent base and the second index matching layer so as to cover the second electrodes, the second leads, or both.

Alternatively, the touch panel may further include a plurality of second electrodes and a second low reflective member. The second electrodes may be arranged at intervals on the second face of the first translucent base so as to intersect with the first electrodes in planar position. The second low reflective member may cover the second electrodes.

In the touch panel of this aspect, the second low reflective member also suppresses light reflection, resulting in further improved visibility of the touch panel.

The touch panel may further include a plurality of first leads, a first protective layer, a plurality of second leads, and a second protective layer. The first leads may be arranged at intervals on the first face of the first translucent base and connected to the first electrodes. The first protective layer may cover the first electrodes, the first leads, or both. The second leads may be arranged at intervals on the second face of the first translucent base and connected to the second electrodes. The second protective layer may cover the second electrodes, the second leads, or both. The first low reflective member may be provided on at least one of the first face of the first translucent base and the first protective layer to cover the first electrodes. The second low reflective member may be provided on at least one of the second face of the first translucent base and the second protective layer to cover the second electrodes.

The touch panel may further include a first index matching layer on the first face of the first translucent base. The first index matching layer may exist at least between the first translucent base and the first electrodes. The first protective layer may be provided on at least one of the first face of the first translucent base and the first index matching layer so as to cover the first electrodes, the first leads, or both, The touch panel may further include a second index matching layer on the second face of the first translucent base. The second index matching layer may exist at least between the first translucent base and the second electrodes. The second protective layer may be provided on at least one of the second face of the first translucent base and the second index matching layer so as to cover the second electrodes, the second leads, or both.

Alternatively, the touch panel may further include an insulating film, a plurality of second electrodes, and a second low reflective member. The insulating film may be provided on the first face of the first translucent base so as to cover the first electrodes. The second electrodes may be arranged at intervals on the insulating film so as to intersect with the first electrodes in planar position. The second low reflective member may be provided on the second face of the first translucent base. The first low reflective member may cover the first and second electrodes.

In the touch panel of this aspect, the second low reflective member also suppresses light reflection, resulting in further improved visibility of the touch panel.

The touch panel may further include a plurality of first leads, a plurality of second leads, and a first protective layer. The first leads may be arranged at intervals on the first face of the first translucent base and connected to the first electrodes. The second leads may be arranged at intervals on the first face of the first translucent base and connected to the second electrodes. The first protective layer may cover the first and second electrodes or the first and second leads. The first low reflective member may be provided on at least one of the insulating film and the first protective layer so as to cover the first and second electrodes.

The touch panel may further include a first index matching layer on the first face of the first translucent base. The first index matching layer may exist at least between the first translucent base and the first electrodes.

In the case where the first translucent base is made of glass, it may have a thickness in the range of 0.05 mm to 2.0 mm. In the touch panel of this aspect, it is possible to reduce the material cost for the first translucent base and improve the sensitivity of the first electrodes.

In the case where the second translucent base is made of glass, it may have a thickness in the range of 0.05 mm to 2.0 mm. In the touch panel of this aspect, it is possible to reduce the material cost for the second translucent base and improve the sensitivity of the second electrodes.

A method of manufacturing a touch panel according to the invention includes:
preparing a first translucent base;
forming a plurality of first electrodes on a first face of the first translucent base;
fixing a first low reflective member onto the first face of the first translucent base so as to cover the first electrodes;
preparing a second translucent base;
forming a plurality of second electrodes on a first face of the second translucent base;
forming a protective layer on the first face of the second translucent base so as to cover the second electrodes; and
affixing a second face on the back side from the first face of the first translucent base to the protective layer.

According to the manufacturing method of the touch panel of this aspect, the first electrodes are covered with the first low reflective member, and the second electrodes are covered with the protective layer. Therefore, the manufacturing method can prevent damage to the first and second electrodes during and after affixing the protective layer to the second face of the first translucent base on the back side from the first face.

The fixing the first low reflective member may be preceded by the forming of a first protective layer on the first face of the first translucent base so as to cover the first electrodes, and the first low reflective member may be fixed onto the first protective layer. It is possible to fix a second low reflective member onto the second face on the back side of the second translucent base from the first face. A first index matching layer may be provided on the first face of the first translucent base. A second index matching layer may be provided on the first face of the second translucent base.

The invention will now be described by way of example and without limitation by reference to the drawings, in which:
Fig. 1A is a schematic bottom view of a touch panel in accordance with an embodiment of the invention.
Fig. 1B is a sectional view of the touch panel taken along 1B-1B in Fig. 1A.
Fig. 2A is a schematic bottom view of a first translucent base of the touch panel, on which first electrodes and first leads are formed.
Fig. 2B is a schematic bottom view of a second translucent base of the touch panel, on which second electrodes and second leads are formed.
Fig. 3A illustrates steps of forming the second translucent base, the second electrodes, the second leads, a second protective layer, and a second low reflective member of the touch panel.
Fig. 3B illustrates steps of forming the first translucent base, the first electrodes, the first leads, a first protective layer, and a first low reflective member of the touch panel.
Fig. 3C illustrates steps of laminating first and second laminates of the touch panel to each other, and a process of connecting an FPC.
Fig. 4 is a sectional view of a first variant of the touch panel.
Fig. 5 is a sectional view of a second variant of the touch panel.

In the brief description of drawings above and in the description which follows, relative spatial terms such as "upper", "lower", "top", "bottom", "right", "front", "rear", "under", etc., are used for the convenience of the skilled reader and refer to the orientation of the touch panel and its constituent parts as depicted in the drawings. No limitation is intended by use of these terms, either in use of the invention, during its manufacture, shipment, custody, or sale, or during assembly of its constituent parts or when incorporated into or combined with other apparatus.

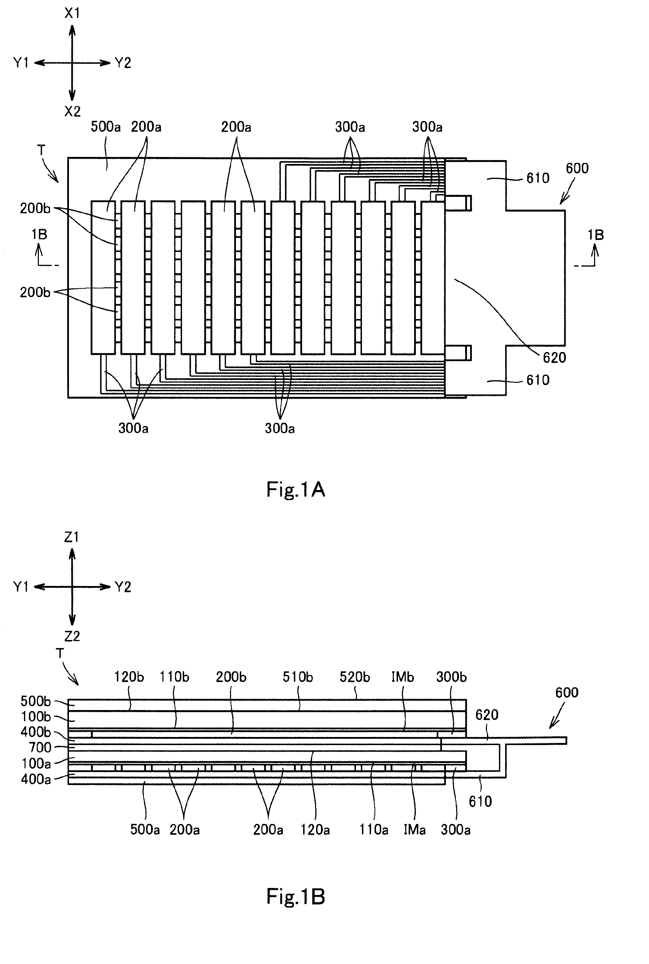

A touch panel in accordance with an embodiment of the invention will be described with reference to Fig. 1A to Fig. 3C. The touch panel T shown in Fig. 1A and Fig. 1B is a projected capacitive touch panel. The touch panel T includes first and second laminated bodies, a flexible printed circuit (FPC) 600 (external connection part), and a transparent adhesive layer 700. Each constituent of the touch panel T will be described below in detail. In Fig. 1A to Fig. 2B, X1 represents one widthwise side of the touch panel T, and X2 represents the other widthwise side of the touch panel T. Y1 represents one lengthwise side of the touch panel T, and Y2 represents the other lengthwise side of the touch panel T. Z1 represents one thicknesswise end of the touch panel T, and Z2 represents the other thicknesswise end of the touch panel T. The Y1-Y2 direction is orthogonal to the X1-X2 direction. The Z1-Z2 direction is orthogonal to Y1-Y2 and X1-X2 directions.

The first laminated body includes a first translucent base 100a, a plurality of first electrodes 200a, a plurality of first leads 300a, a first protective layer 400a, and a first low reflective member 500a. The second laminated body includes a second translucent base 100b, a plurality of second electrodes 200b, a plurality of second leads 300b, a second protective layer 400b, and a second low reflective member 500b.

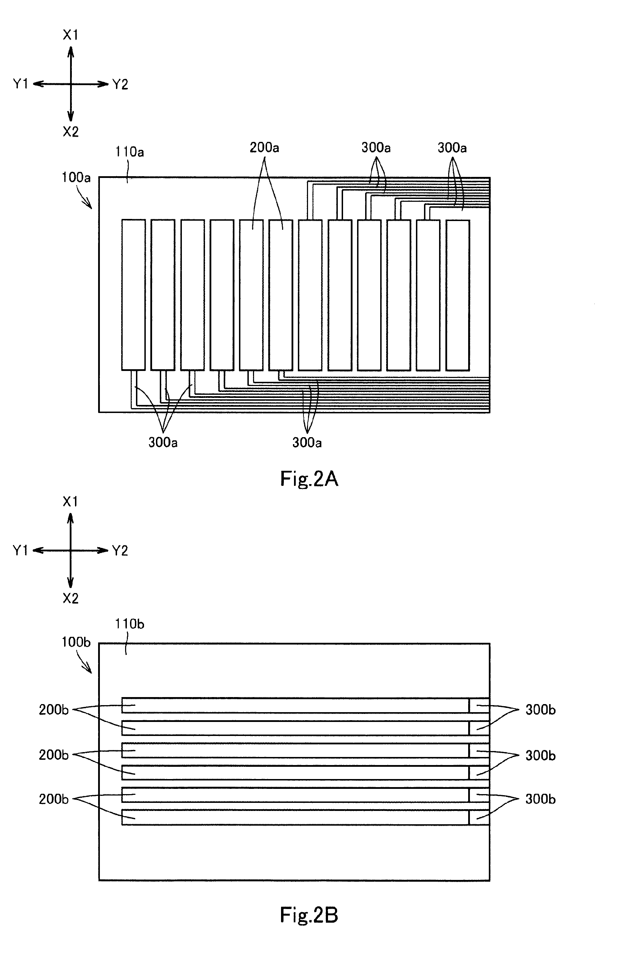

The second translucent base 100b as shown in Fig. 1A, Fig. 1B, and Fig. 2B is a transparent glass sheet. The second translucent base 100b has a thickness in the range of 0.05 mm to 2.0 mm. It is more preferable that the second translucent base 100b have a thickness of 1.1 mm because of the optimum balance between low material cost of the second translucent base 100b and high sensitivity of the second electrodes 200b on the second translucent base 100b. The second translucent base 100b has a first face 110b and a second face 120b, which is on the back side from the first face 110b. The second face 120b is located on the sensing side (front side (Z1 side)) of the touch panel T, and the first face 110b is located on a non-sensing side (back side (Z2 side)) of the touch panel T. In other words, the second face 120b is located closer to a touch sensing face 520b than the first face 110b in the Z1-Z2 direction. An ornamental layer may be provided on the second face 120b so as to cover the first leads 300a and/or second leads 300b.

The second low reflective member 500b as shown in Fig. 1B is a polarizing plate or film that is subjected to anti-glare treatment and/or low-reflection treatment. The second low reflective member 500b is laminated on the second face 120b of the second translucent base 100b. The second low reflective member 500b is the uppermost layer of the touch panel T. The second low reflective member 500b has a fixing face 510b and the touch sensing face 520b on the back side from the fixing face 510b. The fixing face 510b is fixed on the second face 120b of the second translucent base 100b. Substantially no air layer is present between the fixing face 510b of the second low reflective member 500b and the second face 120b of the second translucent base 100b. The touch sensing face 520b is the outer face (top face) of the touch panel T, onto which a detection object such as a finger or a touch pen is touchable. When the second translucent base 100b is broken, the second low reflective member 500b can prevent scattering of the second translucent base 100b.

The second electrodes 200b as shown in Fig. 1A, Fig. 1B, and Fig. 2B are transparent conductive film strips, conductive wires, or other conductors that extend in the Y1-Y2 direction. The second electrodes 200b are arranged at intervals along the X1-X2 direction on the first face 110b of the second translucent base 100b. The transparent conductive film strips may be formed of indium tin oxide (ITO), indium-doped zinc oxide (IZO), aluminum-doped zinc oxide (AZO), or conductive polymer such as PEDOT and PSS. The conductive wires may be silver (Ag) nanowires or metal wires each having a width of 15 µm or smaller. The conductors may be of photosensitive silver. The conductors may be electrically conductive lines of silver, copper, or other metal, each having a width of 15 µm or smaller, and may be fabricated by graph offset or other method.

The second leads 300b as shown in Fig. 1A, Fig. 1B, and Fig. 2B are transparent conductive film strips, strips of metal (e.g. silver (Ag), molybdenum (Mo), aluminum (Al), or copper (Cu)), strips of metal alloy (e.g. alloy of silver (Ag), palladium (Pd), and copper (Cu)), or metal wires. The transparent conductive film strips may be made of the same material as that of the transparent conductive film strips of the second electrode 200b. The second leads 300b are arranged at intervals on the first face 110b of the second translucent base 100b. The second leads 300b each have first and second ends. The first ends of the second leads 300b are connected to respective ends of the second electrodes 200b.

In the case where the second electrodes 200b are transparent conductive film strips, a transparent second index matching layer IMb (second refractive-index adjusting layer) may optionally be provided on the first face 110b of the second translucent base 100b. In this case, the second electrodes 200a and the second leads 300b are provided on the second index matching layer IMb on the first face 110b. The second index matching layer IMb is interposed between the second translucent base 100b and the second electrodes 200b. The transparent conductive film strips serving as the second electrodes 200b has a refractive index in the range of about 1.9 to about 2.0. The material (glass) used for the second translucent base 100b generally has a refractive index in the range of 1.4 to 1.6. The second index matching layer IMb has a refractive index larger than that of the second translucent base 100b and smaller than that of the transparent conductive film strips used for the second electrodes 200b. Therefore, the second index matching layer IMb functions to reduce (adjust) the difference in refractive index between the second translucent base 100b and the second electrodes 200b. It should be noted that the second index matching layer IMb is illustrated in Fig. 1B but not in Fig. 2B to Fig. 3C.

The second protective layer 400b as shown in Fig. 1B is made of transparent acrylic resin. The second protective layer 400b is laminated on the first face 110b of the second translucent base 100b so as to cover the second electrodes 200b and the second leads 300b excluding their second ends. Substantially no air layer is present between the second protective layer 400b and the first face 110b of the second translucent base 100b.

The first translucent base 100a as shown in Fig. 1A to Fig. 2A is a transparent glass sheet. The first translucent base 100a has a thickness in the range of 0.05 mm to 2.0 mm. It is more preferable that the first translucent base 100a have a thickness 0.55 mm because of the optimum balance between low material cost of the first translucent base 100a and high sensitivity of the first electrodes 200a on the first translucent base 100a. The first translucent base 100a has a first face 110a and a second face 120a, which is on the back side from the first face 110a. The second face 120a is fixed to the second protective layer 400b with the transparent adhesive layer 700. The second face 120a faces the first face 110b of the second translucent base 100b. The second face 120a is located on the sensing side (front side (Z1 side)) of the touch panel T, and the first face 110a is located on the non-sensing side (back side (Z2 side)) of the touch panel T. In other words, the first face 110a is located farther from the touch sensing face 520b than the second face 120a in the Z1-Z2 direction.

The first electrodes 200a as shown in Fig. 1A to Fig. 2A are transparent conductive film strips, conductive wires, or other conductors that extend in the X1-X2 direction. The first electrodes 200a are arranged at intervals along the Y1-Y2 direction on the first face 110a of the first translucent base 100a. The first electrodes 200a intersect with the second electrodes 200b at substantially right angles in planar position. The transparent conductive film strips are formed of indium tin oxide (ITO), indium-doped zinc oxide (IZO), aluminum-doped zinc oxide (AZO), or conductive polymer such as PEDOT and PSS. The conductive wires may be silver (Ag) nanowires or metal wires each having a width of 15 µm or smaller. The conductors may be of photosensitive silver. The conductors may be electrically conductive lines of silver, copper, or other metal, each having a width of 15 µm or smaller, and may be fabricated by graph offset or other method.

It is apparent that the conductive wires or other conductors of the first and second electrodes 200a and 200b are not optically transparent. However, the first and second electrodes 200a and 200b as the conductive wires or other conductors are pseudo-transparent by setting the aperture ratio of the first and second electrodes 200a and 200b to 80 % or higher (that is, designing the first and second electrodes 200a and 200b as occupying 20 % or less of the display area of the touch panel T).

The first leads 300a as shown in Fig. 1B to Fig. 2A are transparent conductive film strips, or strips of metal (e.g. silver (Ag), molybdenum (Mo), aluminum (Al), or copper (Cu)), strips of metal alloy (e.g. alloy of silver (Ag), palladium (Pd), and copper (Cu)), or metal wires. The transparent conductive film strips may be made of the same material as that of the transparent conductive film strips of the first electrodes 200a. The first leads 300a are arranged at intervals on the first face 110a of the first translucent base 100a. The first leads 300a have first and second ends. The first leads 300a are routed such that their first ends are connected to respective X1-direction ends or respective X2-direction ends of the first electrodes 200a, and that their second ends are located at either right side corner, as shown in Fig. 2A, of the first face 110a of the first translucent base 100a.

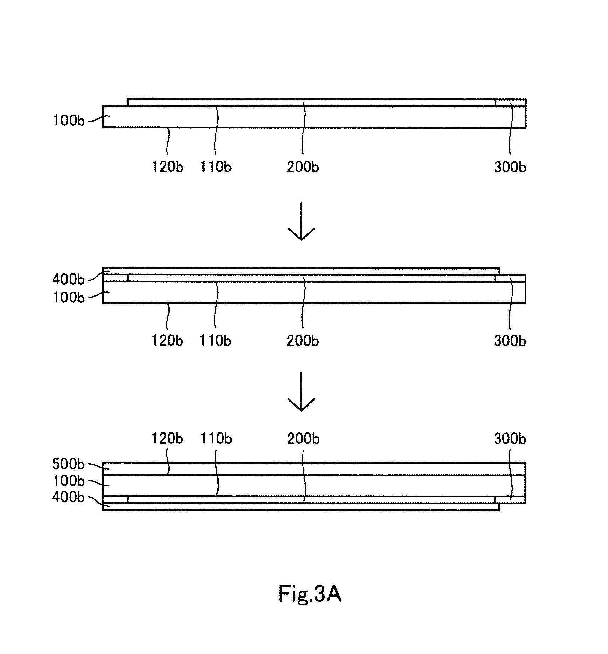

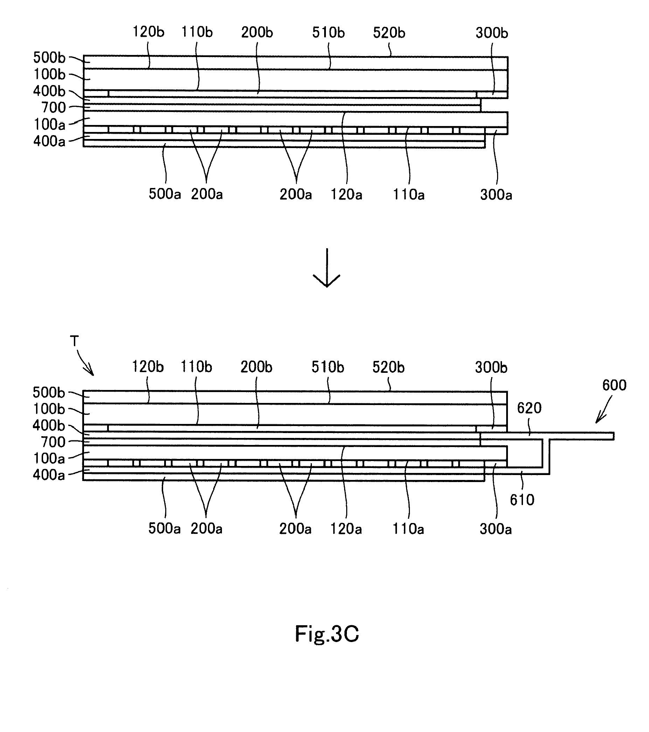

In the case where the first electrodes 200a are transparent conductive film strips, a transparent first index matching layer IMa (first refractive-index adjusting layer) may optionally be provided, as shown, on the first face 110a of the first translucent base 100a. In this case, the first electrodes 200a and the first leads 300a are provided on the first index matching layer IMa on the first face 110a. The first index matching layer IMa is interposed between the first translucent base 100a and the first electrodes 200a. The transparent conductive film strips serving as the first electrodes 200a has a refractive index in the range of about 1.9 to about 2.0. The material (glass) used for the first translucent base 100a generally has a refractive index in the range of 1.4 to 1.6. The first index matching layer IMa has a refractive index larger than that of the first translucent base 100a and smaller than that of the transparent conductive film strips used for the first electrodes 200a. Therefore, the first index matching layer IMa functions to reduce (adjust) the difference in refractive index between the first translucent base 100a and the first electrodes 200a. It should be noted that the first index matching layer IMa is illustrated in Fig. 1B but not in Fig. 2A and Fig. 3A to Fig. 3C.

The first protective layer 400a as shown in Fig. 1B is made of transparent acrylic resin. The first protective layer 400a is laminated on the first face 110a of the first translucent base 100a so as to cover the first electrodes 200a and the first leads 300a excluding their second ends. Substantially no air layer is present between the first protective layer 400a and the first face 110a of the first translucent base 100a.

The first low reflective member 500a as shown in Fig. 1A to Fig. 1B is a low reflective (LR) film. The first low reflective member 500a is provided on the first protective layer 400a so as to cover the first electrodes 200a and the first leads 300a excluding their second ends. The first low reflective member 500a is the lowermost layer of the touch panel T. The first protective layer 400a and the first low reflective member 500a protect the first electrodes 200a and the first leads 300a. Substantially no air layer is present between the first low reflective member 500a and the first protective layer 400a.

As shown in Fig. 1A and Fig. 1B, the FPC 600 includes a pair of first connecting portions 610 and a second connecting portion 620. The first connecting portions 610 extend from the opposite ends of the second connecting portion 620. The first connecting portions 610 are fixed to the above-described corners of the first face 110a of the first translucent base 100a and connected to the second ends of the first leads 300a. The second connecting portion 620 is fixed to the first face 110b of the second translucent base 100b and connected to the second leads 300b. The FPC 600 is used to connect the touch panel T to electronic equipment such as a mobile terminal or a display.

The touch panel T configured as described above may be fabricated in the steps as described below and as illustrated in Fig. 3A to Fig. 3C. By way of example, it is assumed that the first and second electrodes 200a and 200b and the second leads 300b are formed of ITO, and the first leads 300a are formed of silver.

The second laminated body (the second low reflective member 500b, the second translucent base 100b, the second electrodes 200b, the second leads 300b, and the second protective layer 400b) of the touch panel T may be formed in the following steps. First, the second translucent base 100b and an index matching film are prepared. The index matching film (second index matching layer IMb, not shown) is affixed to the first face 110b of the second translucent base 100b. An ITO film is formed on the second index matching layer IMb of the first face 110b. The ITO film is subjected to patterning by etching or other well-known method. As a result, as shown in Fig. 3A, on the second index matching layer IMb on the first face 110b of the second translucent base 100b, there are formed the second electrodes 200b at intervals and the second leads 300b contiguous with the second electrodes 200b (arranged as shown in Fig. 2B).

After that, transparent acrylic resin is applied onto the second index matching layer IMb on the first face 110b of the second translucent base 100b. Care should be taken here to see that there is no air layer formed between the acrylic resin and the second index matching layer IMb. The applied acrylic resin forms the second protective layer 400b. The second protective layer 400b is thus fixed to the second index matching layer IMb on the first face 110b so as to cover the second electrodes 200b and the second leads 300b excluding their second ends on the second index matching layer IMb. After that, the fixing face 510b of the second low reflective member 500b is fixed to the second face 120b of the second translucent base 100b, with care not to form an air layer between the second face 120b of the second translucent base 100b and the fixing face 510b of the second low reflective member 500b. If providing an ornamental layer on the second face 120b of the second translucent base 100b, the ornamental layer may be formed by performing screen printing or gravure printing on the second face 120b or by affixing a decorative film on the second face 120b, before affixing the second low reflective member 500b onto the second face 120b.

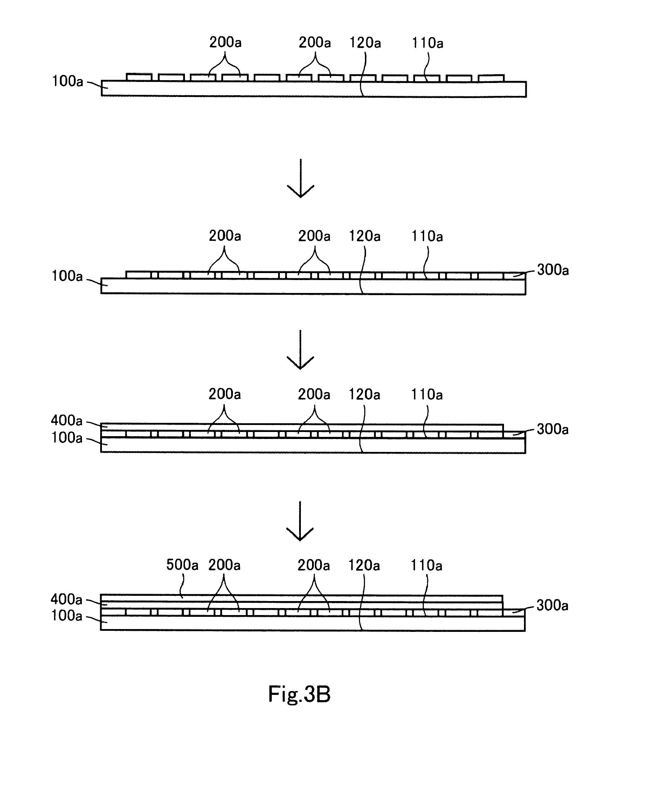

On the other hand, the first laminated body (the first translucent base 100a, the first electrodes 200a, the first leads 300a, the first protective layer 400a, and the first low reflective member 500a) of the touch panel T may be formed in the following steps. First, the first translucent base 100a and an index matching film are prepared. The index matching film (first index matching layer IMa, not shown) is affixed to the first face 110a of the first translucent base 100a. An ITO film is formed on the first index matching layer IMa of the first face 110a. The ITO film is subjected to patterning by etching or other well-known method. As a result, as shown in Fig. 3B, the first electrodes 200a are formed at intervals on the first index matching layer IMa on the first face 110a of the first translucent base 100a. After that, silver wire printing is made on the first index matching layer IMa on the first face 110a of the first translucent base 100a to form the first leads 300a. The printing is made such that the first ends of the first leads 300a overlap the associated X1- and X2-direction ends of the first electrodes 200a. The first leads 300a are thus connected to the first electrodes 200a.

After that, transparent acrylic resin is applied to the first index matching layer IMa on the first face 110a of the first translucent base 100a. Care should be taken here to see that there is no air layer formed between the acrylic resin and the first index matching layer IMa. The applied acrylic resin forms the first protective layer 400a. The first protective layer 400a is thus fixed to the first index matching layer IMa on the first face 110a so as to cover the first electrodes 200a and the first leads 300a excluding their second ends on the first index matching layer IMa. After that, the first protective layer 400a is affixed to the first low reflective member 500a, with care not to form an air layer between the first protective layer 400a and the first low reflective member 500a. As a result, the first low reflective member 500a covers and protects the first electrodes 200a on the first index matching layer IMa on the first face 110a.

The next step is to bond the second laminated body of the touch panel T to the first laminated body of the touch panel T. More specifically, an adhesive (to form transparent adhesive layer 700) is applied to the second protective layer 400b and/or the second face 120b of the first translucent base 100a. The second protective layer 400b is then affixed to the second face 120b of the first translucent base 100a with the transparent adhesive layer 700. The second laminated body of the touch panel T and the first laminated body of the touch panel T are thus bonded together, with the second electrodes 200b intersecting with the first electrodes 200a at substantially right angles in planar position.

The FPC 600 is also prepared. The first connecting portions 610 of the FPC 600 are crimped with an anisotropic conductive film onto the first face 110a of the first translucent base 100a. The first connecting portions 610 are thus connected to the first leads 300a. Similarly, the second connecting portion 620 of the FPC 600 is crimped with an anisotropic conductive film onto the first face 110b of the second translucent base 100b. The second connecting portion 620 is thus connected to the second leads 300b.

The touch panel T has at least the following technical features. First, the touch panel T is configured to prevent damage to the first and second electrodes 200a and 200b during the manufacture and transportation of the touch panel T. Specifically, in manufacturing the first laminated body, the first electrodes 200a are formed on the first face 110a, the first protective layer 400a is formed on the first face 110a so as to cover the first electrodes 200a, and the first low reflective member 500a is fixed to the first protective layer 400a so as to cover the first electrodes 200a.The first electrodes 200a are thus covered with the first protective layer 400a and the first low reflective member 500a and therefore protected from damage during and after the manufacture of the touch panel T. Similarly, in manufacturing the second laminated body, the second electrodes 200b are formed on the first face 110b, and the second protective layer 400b is formed on the first face 110b so as to cover the second electrodes 200b. The second electrodes 200b are thus covered with the second protective layer 400b and therefore protected from damage during and after the manufacture of the touch panel T.

Second, the touch panel T has an improved visibility for the following reasons. Generally speaking, if the first electrodes are disposed on a different layer that substantially differs in refractive index from the first electrodes (if the first electrodes are exposed, the different layer is an air layer (refractive index = 1)), light reflects at the boundary of the first electrodes and the different layer. In contrast, the first electrodes 200a of the touch panel T are covered with the first protective layer 400a and the first low reflective member 500a. The first protective layer 400a and the first low reflective member 500a have refractive indexes close to that of the first electrodes 200a, reducing light reflection from the boundary between the first electrodes 200a and the first protective layer 400a and the first low reflective member 500a. The reduction in light reflection is advantageously achieved especially by the first low reflective member 500a covering the first electrodes 200a. Further, in the case where the first index matching layer IMa is interposed between the first translucent base 100a and the first electrodes 200a, the first index matching layer IMa serves to decrease the difference in refractive index between the first translucent base 100a and the first electrodes 200a. This can reduce light reflection at the boundary between the first translucent base 100a and the first electrodes 200a. In the case where the second index matching layer IMb is interposed between the second translucent base 100b and the second electrodes 200b, the second index matching layer IMb serves to decrease the difference in refractive index between the second translucent base 100b and the second electrodes 200b. This can reduce light reflection form the boundary between the second translucent base 100b and the second electrodes 200b. The second low reflective member 500b also suppresses light reflection.

Third, the first low reflective member 500a serves to suppress light reflection and protects the first electrodes 200a, while the second low reflective member 500b serves to suppress light reflection and prevent scattering of the second translucent base 100b, if broken. The first and second low reflective members 500a and 500b each have the above two functions, contributing to cost reduction of the touch panel T.

Fourth, the touch panel T can provide higher sensitivity at lower cost for the following reasons. The first and second translucent bases 100a and 100b each have a thickness in the range of 0.05 mm to 2.0 mm. This small thickness leads to reduced material costs of the first and second translucent bases 100a and 100b and also to improved sensitivity of the first and second electrodes 200a and 200b.

The touch panel T is not limited to the embodiment described above but may be modified in any manner within the scope of the claims. Specific modifications will be described below in detail.

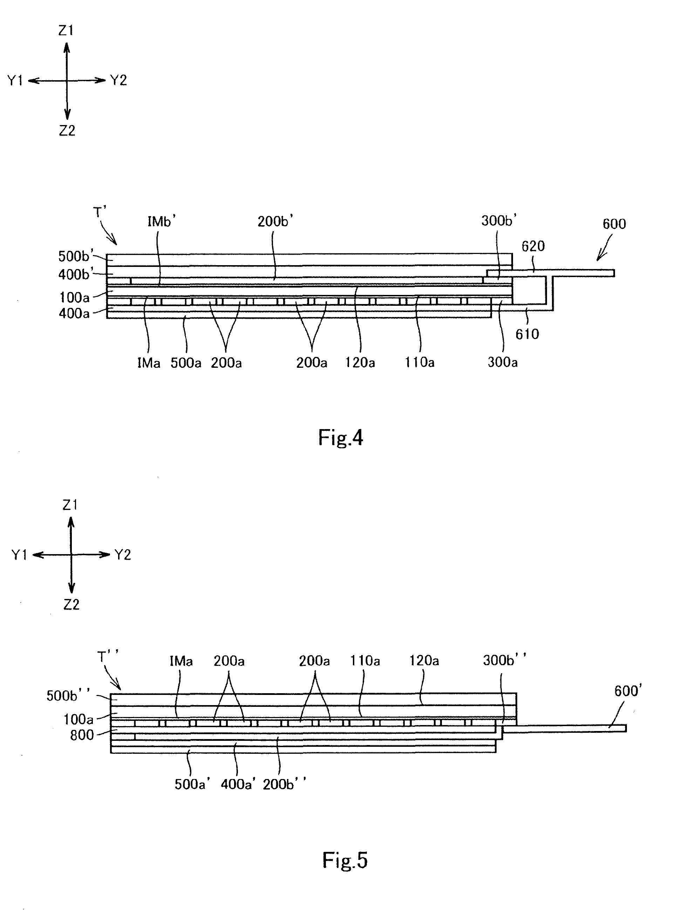

The second electrodes 200b of the embodiment are arranged at intervals on the first face 110b of the second translucent base 100b so as to intersect with the first electrodes 200a at right angles in planar position. However, the second electrodes of the invention may be arranged in any manner as long as they intersect with the first electrodes in planar position. For example, as in a modified touch panel T' shown in Fig. 4, the second electrodes 200b' may be arranged at intervals along the X1-X2 direction on the second face 120a of the first translucent base 100a and extend in the Y1-Y2 direction. The second electrodes 200b' may intersect with the first electrodes 200a at substantially right angles. Second leads 300b' may be provided on the second face 120a of the first translucent base 100a, as in the touch panel T. A second protective layer 400b' may be provided on the second face 120a of the first translucent base 100a so as to cover the second electrodes 200b' and the second leads 300b' excluding their second ends. A second low reflective member 500b' may be laminated on the second protective layer 400b'. The first index matching layer IMa may be provided on the first face 110a of the first translucent base 100a as in the touch panel T, while a second index matching layer IMb' may be provided on the second face 120a of the first translucent base 100a. The first electrodes 200a may be provided on the first index matching layer IMa as in the touch panel T, while the second electrodes 200b' may be provided on the second index matching layer IMb'.

Alternatively, as in another modified touch panel T" in which an insulating film 800 is provided on the first face 110a of the first translucent base 100a so as to cover the first electrodes 200a, the second electrodes 200b" may be arranged at intervals along the X1-X2 direction on the insulating film 800 and extend in the Y1-Y2 direction. The second electrodes 200b" may intersect with the first electrodes 200a at substantially right angles. Second leads 300b" may be arranged at intervals on the first face 110a of the first translucent base 100a. The second leads 300b" may each have first and second ends and be routed such that the first ends are connected to respective Y2-direction ends of the second electrodes 200b", and that the second ends are located at the right end (as shown in Fig. 2A) of the first face 110a of the first translucent base 100a. Although not shown in Fig. 5, the first leads 300a may be provided on the first face 110a of the first translucent base 100a as in the embodiment. A first protective layer 400a' may be provided on the insulating film 800 and on the first face 110a of the first translucent base 100a so as to cover the first and second electrodes 200a and 200b" and the first and second leads 300a and 300b" excluding their second ends. A first low reflective member 500a' may be provided on the first protective layer 400a' so as to cover the first and second electrodes 200a and 200b" and the first and second leads 300a and 300b" excluding their second ends. A second low reflective member 500b" may be laminated on the second face 120a of the first translucent base 100a. An FPC 600' may be fixed to the first face 110a of the first translucent base 100a and connected to the second ends of the first and second leads 300a and 300b". The first index matching layer IMa may be optionally provided on the first face 110a of the first translucent base 100a. If provided, the first electrodes 200a may be provided on the first index matching layer IMa on the first face 110a.

In the embodiment and the modifications described above, the first translucent base 100a is a transparent glass sheet having the first and second faces 110a and 100b. However, the first translucent base of the invention may be any translucent member having a first face on the non-sensing side (back side) of the touch panel and a second face on the sensing side (front side) of the touch panel. For example, the first translucent base may be a film of translucent resin such as polyethylene terephthalate (PET). The first translucent base may alternatively be a translucent rigid sheet glass or translucent rigid resin film, or a translucent flexible sheet glass or translucent flexible resin film. The first translucent base, if formed of rigid or flexible glass, may have a thickness as described for the above embodiment.

The first electrodes of the invention may be modified in any manner as long as they are arranged at intervals on the first face of the first translucent base of any aspect described above. The first electrodes of the invention may be provided directly on the first face of the first translucent base, or on the index matching layer on the first face of the first translucent base.

The first low reflective member of the invention may be any member adapted to reduce light reflection and cover the first electrodes. For example, the touch panels T and/or T' may be modified such that the first low reflective member 500a is provided on the first face 110a of the first translucent base 100a so as to cover the first electrodes 200a. In this case, the first protective layer 400a can be omitted. The touch panel T" may be modified such that the first low reflective member 500a' is provided on the insulating film 800 so as to cover the first and second electrodes 200a and 200b". In this case, the first protective layer 400a' can be omitted. The first low reflective member of the invention may not be the lowermost layer of the touch panel of the invention, which may include another layer, such as a protective layer, under the first low reflective member. The first low reflective member of any aspect described above may be a polarizing plate or film subjected to anti-glare treatment and/or low-reflection treatment.

The second translucent base can be omitted in the invention, as in the touch panel T' and T". Alternatively, the second translucent base of the invention may be any translucent member having a first face and a second face on the back side from the first face, wherein the first face is opposed to the second face of the first translucent base. For example, the second translucent base may be a film of translucent resin such as PET. The second translucent base may alternatively be a translucent rigid sheet glass or translucent rigid resin film, or a translucent flexible sheet glass or translucent flexible resin film. The second translucent base, if formed of rigid or flexible glass, may have a thickness as described for the above embodiment.

The invention can be realized without the second low reflective member. The invention can also be realized with the second low reflective member replaced with a protective layer on the second face of the second translucent base or the second face of the first translucent base. The second low reflective member may not be the uppermost layer of the touch panel of the invention, which may include another layer such as a protective layer or a decorative panel on top of the second low reflective member. The touch sensing face of the invention may be any top face of the touch panel or an outer face of the touch sensing part of electronic equipment to install the touch panel. The second low reflective member of the invention may be of any material adapted to reduce light reflection. For example, the second low reflective member may be an LR film.

The invention can be realized without the first index matching layer and/or the second index matching layer. The first index matching layer may be provided on the first face of the first translucent base even if the first electrodes are not the transparent conductive film strips but formed of other material. The first index matching layer may be of any material having a refractive index larger than that of the first translucent base and smaller than that of the first electrodes. In the case where the first index matching layer is provided on the first face of the first translucent base, the first leads may also be provided on this first face. If the second electrodes are not the transparent conductive film strips but formed of other material, the second index matching layer may be provided on the first face of the second translucent base or on the second face of the first translucent base. The second index matching layer may be of any material with a refractive index larger than that of the first translucent base or than that of the second translucent base, and smaller than that of the second electrodes. In the case where the second index matching layer is provided on the first face of the second translucent base or on the second face of the first translucent base, the second leads may also be provided on the first face of the second translucent base or on the second face of the first translucent base.

The invention can be realized without the first protective layer and/or the second protective layer. When the first protective layer is omitted, the first low reflective member may be provided on the first face of the first translucent base of any aspect described above so as to cover at least the first electrodes. When the second protective layer is omitted, the second face of the first translucent base may be fixed to the first face of the second translucent base or to the second low reflective member.

The first protective layer of the invention may be any translucent member adapted to cover the first electrodes and/or the first leads. For example, the touch panels T and T' may be modified such that the first protective layer 400a covers the first electrodes 200a partly or entirely or covers the first leads 300a excluding their second ends. In this case, the first low reflective member 500a may be provided on the first protective layer 400a and on the first face 110a of the first translucent base 100a so as to cover the first electrodes 200a. The touch panel T" may be modified such that the first protective layer 400a' covers the first and second electrodes 200a and 200b" partly or entirely or covers the first and second leads 300a and 300b" excluding their second ends. In this case, the first low reflective member 500a' may be provided on the first protective layer 400a' and on the insulating film 800 so as to cover the first and second electrodes 200a and 200b".

The second protective layer of the invention may be any translucent member adapted to cover the second electrodes and/or the second leads. For example, the touch panel T may be modified such that the second protective layer 400b covers the second electrodes 200b partly or entirely or covers the second leads 300b excluding their second ends. In this case, the second face 120a of the first translucent base 100a may be fixed on the second protective layer 400b and on the first face 110b of the second translucent base 100b. The touch panel T' may be modified such that the second protective layer 400b' covers the second electrodes 200b' partly or entirely or covers the second leads 300b' excluding their second ends. In this case, the second low reflective member 500b' may be fixed on the second protective layer 400b' and on the second face 120a of the first translucent base 100a.

The external connection part of the invention may be an FPC as in the embodiment and the modifications described above. The external connection part may be any member adapted to connect the first and second electrodes to the outside. For example, the external connection part may be pins or a connector connectable with the first and second electrodes. Alternatively, the external connection part may be portions of the first and second leads.

The touch panel of the invention may be manufactured by any method including preparing a first translucent base, forming a plurality of first electrodes on a first face of the first translucent base, fixing a first low reflective member onto the first face of the first translucent base so as to cover the first electrodes, preparing a second translucent base, forming a plurality of second electrodes on a first face of the second translucent base, forming a protective layer (second protective layer) on the first face of the second translucent base so as to cover the second electrodes, and a second face on the back side from the first face of the first translucent base to the protective layer. Before forming the first electrodes on the first face of the first translucent base, the first index matching layer may be provided on the first face of the first translucent base and the first electrodes may then be provided on the first index matching layer. Before forming the second electrodes on the first face of the second translucent base, the second index matching layer may be provided on the first face of the second translucent base and the second electrodes may then be formed on the second index matching layer. Before fixing the first low reflective member, the first protective layer may be provided on the first face of the first translucent base so as to cover the first electrodes, and the first low reflective member may be fixed onto the first protective layer. The second low reflective member may be fixed to the second face on the back side of the second translucent base from the first face.

It should be appreciated that the embodiment and modifications are described above by way of example only. The materials, shapes, dimensions, numbers, arrangements, and other configurations of the constituents of the touch panel may be modified in any manner if they can perform similar functions. The configurations of the embodiment and the modifications described above may be combined in any possible manner.

### Reference Signs List

100a: first translucent base
   110a: first face
   120a: second face
100b: second translucent base
   110b: first face
   120b: second face
200a: first electrodes
200b: second electrodes
300a: first leads
300b: second leads
400a: first protective layer
400b: second protective layer
500a: first low reflective member
500b: second low reflective member
600: FPC (external connection part)
700: adhesive layer
IMa: first index matching layer
IMb: second index matching layer

## Claims

1. A touch panel (T, T', T") comprising:
a first translucent base (100a), the first translucent base including:
a first face (110a) on a non-sensing side of the touch panel, and
a second face (120a) on a sensing side of the touch panel;
a plurality of first electrodes (200a) arranged at intervals on the first face of the first translucent base; and
a first low reflective member (500a, 500a') configured to cover the first electrodes.

2. The touch panel (T) according to claim 1, further comprising:
a second translucent base (100b), the second translucent base including:
a first face (110b) disposed on the second face (120a) of the first translucent base (100a), and
a second face (120b) on the back side from the first face;
a plurality of second electrodes (200b) arranged at intervals on the first face of the second translucent base, the second electrodes intersecting with the first electrodes (200a) in planar position; and
a second low reflective member (500b) on the second face of the second translucent base.

3. The touch panel (T) according to claim 2, further comprising:
a plurality of first leads (300a) arranged at intervals on the first face (110a) of the first translucent base (100a), the first leads being connected to the first electrodes (200a);
a first protective layer (400a) to cover the first electrodes, the first leads, or both;
a plurality of second leads (300b) arranged at intervals on the first face (110b) of the second translucent base (100b), the second leads being connected to the second electrodes (200b); and
a second protective layer (400b) to cover the second electrodes, the second leads, or both, wherein
the second face (120a) of the first translucent base is fixed to at least one of the first face of the second translucent base and the second protective layer, and
the first low reflective member (500a) is provided on at least one of the first face of the first translucent base and the first protective layer so as to cover the first electrodes.

4. The touch panel (T) according to claim 3, further comprising:
a first index matching layer (IMa) on the first face (110a) of the first translucent base (100a), the first index matching layer existing at least between the first translucent base and the first electrodes (200a); and
a second index matching layer (1Mb) on the first face (110b) of the second translucent base (100b), the second index matching layer existing at least between the second translucent base and the second electrodes (200b), wherein
the first protective layer (400a) is provided on at least one of the first face of the first translucent base and the first index matching layer so as to cover the first electrodes, the first leads (300a), or both, and
the second protective layer (400b) is provided on at least one of the first face of the second translucent base and the second index matching layer so as to cover the second electrodes, the second leads (300b), or both.

5. The touch panel (T') according to claim 1, further comprising:
a plurality of second electrodes (200b') arranged at intervals on the second face (120a) of the first translucent base (100a), the second electrodes intersecting with the first electrodes (200a) in planar position; and
a second low reflective member (500b') to cover the second electrodes.

6. The touch panel (T') according to claim 5, further comprising:
a plurality of first leads (300a) arranged at intervals on the first face (110a) of the first translucent base (100a), the first leads being connected to the first electrodes (200a);
a first protective layer (400a) to cover: the first electrodes; the first leads; or both;
a plurality of second leads (300b') arranged at intervals on the second face (120a) of the first translucent base, the second leads being connected to the second electrodes (200b');
a second protective layer (400b') to cover the second electrodes, the second leads, or both, wherein
the first low reflective member (500a) is provided on at least one of the first face of the first translucent base and the first protective layer to cover the first electrodes, and
the second low reflective member (500b') is provided on at least one of the second face of the first translucent base and the second protective layer so as to cover the second electrodes.

7. The touch panel (T') according to claim 6, further comprising:
a first index matching layer (IMa) on the first face (110a) of the first translucent base (100a), the first index matching layer existing at least between the first translucent base and the first electrodes (200a); and
a second index matching layer (IMb') on the second face (120a) of the first translucent base, the second index matching layer existing at least between the first translucent base and the second electrodes (200b'), wherein
the first protective layer (400a) is provided on at least one of the first face of the first translucent base and the first index matching layer so as to cover the first electrodes, the first leads (300a), or both, and
the second protective layer (400b') provided on at least one of the second face of the first translucent base and the second index matching layer so as to cover the second electrodes, the second leads (300b'), or both.

8. The touch panel (T") according to claim 1, further comprising:
an insulating film (800) on the first face (110a) of the first translucent base (100a) so as to cover the first electrodes (200a);
a plurality of second electrodes (200b") arranged at intervals on the insulating film, the second electrodes intersecting with the first electrodes in planar position; and
a second low reflective member (500b") on the second face (120a) of the first translucent base, wherein
the first low reflective member (500a') covers the first and second electrodes.

9. The touch panel (T") according to claim 8, further comprising:
a plurality of first leads (300a) arranged at intervals on the first face (110a) of the first translucent base (100a), the first leads being connected to the first electrodes (200a);
a plurality of second leads (300b") arranged at intervals on the first face of the first translucent base, the second leads being connected to the second electrodes (200b"); and
a first protective layer (400a') to cover the first and second electrodes or the first and second leads, wherein
the first low reflective member (500a') is provided on at least one of the insulating film (800) and the first protective layer so as to cover the first and second electrodes.

10. The touch panel (T") according to claim 9, further comprising a first index matching layer (IMa) on the first face (110a) of the first translucent base (100a), the first index matching layer existing at least between the first translucent base and the first electrodes (200a).

11. The touch panel (T, T', T") according to any one of claims 1 to 8, wherein
the first translucent base (100a) is made of glass and has a thickness in the range of 0.05 mm to 2.0 mm.

12. The touch panel (T, T', T") according to any one of claims 2 to 4, wherein
the second translucent base (100b) is made of glass and has a thickness in the range of 0.05 mm to 2.0 mm.
